# DEMANDE DE BREVET EUROPEEN

(11) **EP 1 845 270 A1**
(43) Date de publication de la demande: **17.10.2007**
(21) Numéro de dépôt: 07300922.7
(22) Date de dépôt: 04.04.2007
(51) Int. Cl.: F16C 1/26, F16B 9/02, F16L 5/00

(54) **Dispositif de fixation d'une pièce, particulièrement d'une gaine d'un câble de commande, sur un bâti**

(30) Priorité: 11.04.2006 FR 0651320
(71) Demandeur: PEUGEOT CITROËN AUTOMOBILES S.A., 78140 Velizy Villacoublay (FR)
(72) Inventeur: Richard, Olivier, 28130 Pierres (FR)

(57) **Abrégé**

L'invention porte sur un dispositif de fixation d'une pièce (3) sur un bâti, comportant :
un support (2) solidaire dudit bâti, ledit support (2) présentant une découpe sensiblement circulaire débouchant perpendiculairement à l'axe (XX') de ladite découpe par une ouverture de largeur inférieure au diamètre de ladite découpe ; et
un module de fixation porté par ladite pièce (3) et comportant :
- un corps de révolution (1) présentant à l'une de ses extrémités deux flasques (12, 13) en saillie radiale délimitant une gorge (14) apte à être engagé radialement dans la découpe dudit support (2), à travers l'ouverture ; et
- un manchon tubulaire (4) monté coulissant sur ledit corps (1), formé d'un tube présentant une pluralité de branches faisant saillie longitudinalement à l'une des extrémités dudit tube ; lesdites branches étant conformées pour venir pénétrer à travers des percées ménagées dans lesdites flasques (12, 13) de façon à pouvoir faire varier les dimensions radiales de ladite gorge (14) pour permettre ou non le passage du module de fixation à travers l'ouverture.

## Description

La présente invention concerne un dispositif de fixation d'une pièce sur un bâti.

Elle concerne plus particulièrement un dispositif de fixation d'une gaine d'un câble de commande par exemple pour une boîte de vitesses d'un véhicule, notamment d'un véhicule automobile, sur un bâti susceptible de constituer un élément de la structure du véhicule ou de la boîte de vitesses. Ce dispositif comporte un support agencé pour faire office d'arrêt de gaine et un module de fixation susceptibles de constituer un embout de gaine de commande par câbles, dans le cas d'une commande de boîte de vitesses de véhicule.

Pour rappel, une commande par câbles de boîte de vitesses consiste à effectuer la sélection et le passage des vitesses par l'intermédiaire d'un câble respectivement de sélection et de passage reliant la partie inférieure du levier de vitesses au système mécanique de sélection et de passage implanté à proximité de la mécanique interne de la boîte de vitesses. Les extrémités des câbles de commande sont solidaires d'embouts de gaine de commande. L'un des embouts est fixé sur un premier support lié à l'habitacle du véhicule, tandis que l'autre embout est fixé à un second support lié à la boîte de vitesses, par exemple au carter de cette boîte de vitesses. Ces embouts de gaine permettent ainsi le guidage selon un chemin défini desdits câbles de passage et de sélection de vitesses.

Les moyens utilisés pour assurer la fixation sur un support des embouts, généralement réalisés sous forme d'un corps de révolution, ne sont pas satisfaisants.

En effet, selon l'état de la technique, l'embout est généralement engagé d'une manière axiale au support, au travers d'une ouverture. Après la mise en place de l'embout dans l'ouverture du support, une agrafe est engagée radialement, par l'opérateur de montage, dans des agencements spécifiques de l'embout afin d'assurer le blocage en translation et ainsi la fixation de l'embout de gaine sur le support. Ce montage peut s'avérer particulièrement difficile pour l'opérateur, car nécessitant un effort important et l'utilisation de ses deux mains pour la mise en place de l'agrafe.

Ce montage est d'autant plus délicat si l'on considère les conditions dans lesquelles travaille l'opérateur, puisque ce montage s'effectue généralement en aveugle (c'est-à-dire sans visibilité pour l'opérateur) avec un levier de vitesses implanté sur le plancher du véhicule automobile. En outre, l'agrafe étant indépendante du support et de l'embout avant fixation, les risques de perte de l'agrafe existent. On observe également qu'il est parfois difficile à l'opérateur de savoir si l'opération de montage a été correctement réalisée, c'est-à-dire si l'agrafe est bien mise en place, de sorte que des problèmes ultérieurs de désaccouplement de l'embout par rapport au support ne sont pas à exclure.

L'état de la technique peut être également illustré par l'enseignement de la demande de brevet français FR 2 841 614. Dans cette demande, l'embout de gaine n'est pas engagé d'une manière axiale au support, mais selon un mouvement radial dirigé de haut en bas correspondant à l'engagement de l'embout dans une découpe radiale du support, cette découpe coopérant avec une rainure pratiquée sur la périphérie de l'embout. La fixation de l'embout sur le support est assurée par un dispositif de maintien, solidaire de l'embout, constitué de bords flexibles présentant des ergots. Lorsque l'embout vient en butée dans le fond de la découpe, les ergots se logent dans des cavités pratiquées dans le support, assurant ainsi la fixation recherchée.

Ce type d'embout de gaine présente l'inconvénient d'obliger l'opérateur en charge du montage, à présenter l'embout face à la découpe selon une orientation telle que les bords flexibles puissent coopérer avec les cavités. Cet indexation nécessaire limite la rotation de la gaine lors de la mise en place de l'embout sur le support, engendrant ainsi un effort de torsion gênant pour l'opérateur, surtout si l'on considère, d'une part, la longueur du câble importante et, d'autre part, sa rigidité.

La présente invention a notamment pour but de pallier à tout ou partie des inconvénients précités.

A cet effet, elle propose un dispositif de fixation d'une pièce sur un bâti, comportant un support solidaire dudit bâti, ledit support présentant une découpe sensiblement circulaire débouchant perpendiculairement à l'axe de ladite découpe par une ouverture de largeur inférieure au diamètre de ladite découpe ; et un module de fixation porté par ladite pièce et comportant :
- un corps de révolution présentant à l'une de ses extrémités deux flasques en saillie radiale délimitant une gorge apte à être engagé radialement dans la découpe dudit support, à travers l'ouverture ; et
- un manchon tubulaire monté coulissant sur ledit corps, formé d'un tube présentant une pluralité de branches faisant saillie longitudinalement à l'une des extrémités dudit tube ; lesdites branches étant conformées pour venir pénétrer à travers des percées ménagées dans lesdites flasques de façon à pouvoir faire varier les dimensions radiales de ladite gorge pour permettre ou non le passage du module de fixation à travers l'ouverture.

Selon une caractéristique, les branches du manchon tubulaire comprennent deux portions de dimension différente, une première et une deuxième portions inscrites respectivement dans un cercle de diamètre inférieure à la largeur de l'ouverture et dans un cercle de diamètre sensiblement inférieur au diamètre de la découpe ; le manchon tubulaire étant monté entre deux positions :
- une position de verrouillage dans laquelle la deuxième portion s'étend au moins partiellement entre les deux flasques de sorte à coopérer avec la découpe pour bloquer radialement le module de fixation ; et
- une position de montage dans laquelle la première portion s'étend entre les deux flasques du corps de sorte à pouvoir engager radialement ledit module de fixation dans la découpe du support à travers l'ouverture.

Selon une autre caractéristique, les branches présentent une variation sensiblement linéaire d'épaisseur radiale.

Conformément à d'autres caractéristiques avantageuses de l'invention :
- le module de fixation comprend un organe formant butée fixé solidairement à l'extrémité du corps opposée à la gorge, ledit organe formant butée comprenant une bague montée autour de ladite extrémité afin de faire office de butée axiale du manchon ;
- le module de fixation comprend un organe élastique en appui respectivement sur l'extrémité du manchon opposée aux branches et sur la flasque du corps en regard de ladite extrémité, afin de maintenir le manchon contre l'organe formant butée ;
- l'ouverture du support est délimitée par les extrémités en regard de deux pentes inclinées en direction de la découpe et sensiblement symétriquement opposées par rapport à l'axe de ladite découpe ; lesdites pentes étant aptes à coopérer avec les branches du manchon afin de faire coulisser ledit manchon sur le corps ;
- les branches comportent un épaulement radial en regard du tube du manchon, apte à venir en butée contre le support autour de sa découpe.

Dans un mode de réalisation particulier, l'extrémité libre des branches est affleurante à la flasque disposée à l'extrémité du corps, lorsque l'épaulement radial est en butée contre le support.

Avantageusement, le nombre, la disposition angulaire et l'orientation des branches sont prédéterminés de sorte à pouvoir bloquer radialement le module de fixation dans la découpe du support.

L'invention se rapporte également à un dispositif de fixation tel que décrit ci avant, où le module de fixation est agencé pour faire office d'embout de gaine et le support d'arrêt de gaine, la pièce étant une gaine d'un câble de commande notamment pour une boîte de vitesses d'un véhicule automobile.

D'autres caractéristiques et avantages de la présente invention apparaîtront à la lecture de la description détaillée ci-après, d'un exemple de mise en oeuvre non limitatif, faite en référence aux figures annexées dans lesquelles :
- la figure 1 est une vue en perspective du dispositif de fixation selon l'invention ;
- la figure 2 est une vue en perspective du support selon l'invention ;
- la figure 3 est une vue en perspective du corps de révolution et de l'organe formant butée selon l'invention ;
- la figure 4 est une vue en perspective du manchon tubulaire selon l'invention ;
- la figure 5 est une vue en perspective du manchon tubulaire coopérant avec le support selon l'invention ;
- la figure 6a est une vue en perspective du dispositif de fixation selon l'invention, avant l'engagement radial du module sur le support, le module étant en position de verrouillage ;
- la figure 6b est une vue en perspective du dispositif de fixation selon l'invention, lors de l'engagement radial du module sur le support, le module étant en position de montage ;
- la figure 6c est une vue en perspective, selon un angle différent de celui de la figure 6b, du dispositif de fixation selon l'invention lors de l'engagement radial du module sur le support, le module étant en position de montage ;
- la figure 6d est une vue en perspective du dispositif de fixation selon l'invention, quand le module est fixé sur le support en position de verrouillage ;
- la figure 7a est une vue de face du dispositif de fixation selon l'invention ;
- la figure 7b est une vue en coupe, selon l'axe BB' de la figure 7a, du dispositif de fixation selon l'invention quand le module est fixé sur le support en position de verrouillage;
- la figure 7c est une vue en coupe selon l'axe CC' de la figure 7b ;
- la figure 8a est une vue en coupe, selon l'axe BB' de la figure 7a, du dispositif de fixation selon l'invention quand le module n'est pas fixé sur le support en position de montage ; et
- la figure 8b est une vue en coupe selon l'axe EE' de la figure 8a.

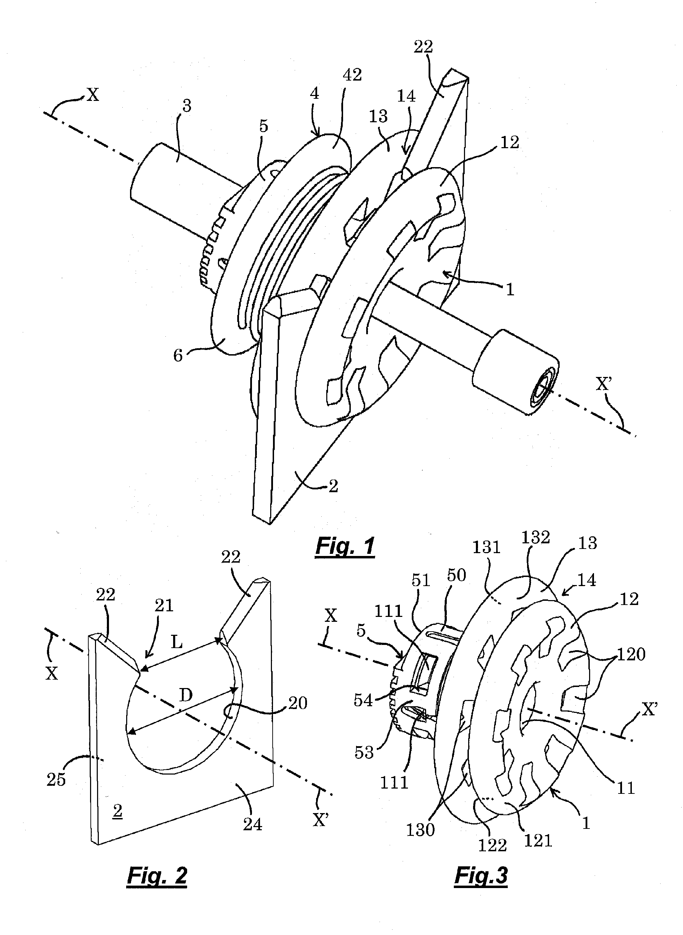

La figure 1 représente une vue en perspective du dispositif de fixation d'une pièce 3 sur un bâti, ladite pièce 3 étant susceptible de constituer une gaine d'un câble de commande notamment pour une boîte de vitesses d'un véhicule automobile et le bâti étant un élément de la structure du véhicule ou de la boîte de vitesses, comme le carter de ladite boîte de vitesses.

Le dispositif de fixation selon l'invention comporte :
- un support 2 solidaire du bâti et agencé notamment pour faire office d'arrêt de gaine ;
- un module de fixation porté par la pièce 3, susceptible de constituer un embout de gaine d'un câble de commande, et destiné à être verrouillé sur le support 2.

Comme représenté en figure 2, le support 2 est constitué d'une plaque de forme générale rectangulaire d'épaisseur e, s'étendant transversalement par rapport à un axe longitudinal XX', et présentant :
- une découpe radiale 20 sensiblement circulaire sur une portion d'angle supérieure à 180°, centrée sur l'axe longitudinal XX' correspondant, dans le cas d'un arrêt de gaine, à l'axe du câble de commande et de la gaine 3 correspondante ;
- une ouverture 21 de sorte que la découpe 20 débouche perpendiculairement à l'axe longitudinal XX' par ladite ouverture 21 de largeur L inférieure au diamètre D de ladite découpe 20 ; et
- deux pentes 22 inclinées en direction de la découpe 20 et symétriquement opposées par rapport à l'axe longitudinal XX' ; l'ouverture 21 étant délimité par les extrémités en regard des pentes 22 et les pentes 22 présentant sensiblement une forme de biseau.

Le module de fixation comporte :
- un corps de révolution 1 présentant à l'une de ses extrémités deux flasques 12, 13 en saillie radiale délimitant une gorge 14 apte à être engagé radialement dans la découpe 20 du support 2 à travers l'ouverture 21 ; et
- un manchon tubulaire 4 monté coulissant sur le corps 1, formé d'un tube 41 présentant une pluralité de branches 43 faisant saillie longitudinalement à l'une des extrémités dudit tube 41.

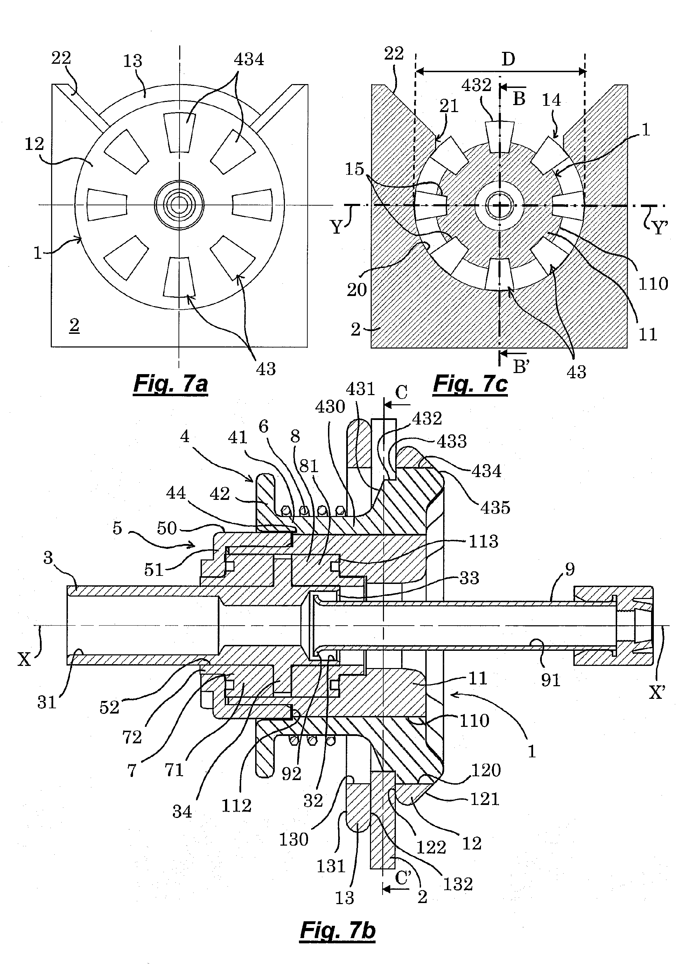

Comme représenté en figures 3 et 7b, le corps 1 est un corps creux constitué d'une pièce tubulaire de révolution autour de l'axe longitudinal XX' et comprenant :
- un tube creux 11 s'étendant le long de l'axe longitudinal XX' ; et
- les première 12 et deuxième 13 flasques, ou parties annulaires, faisant saillie radialement sur la périphérie externe 110 de ce tube creux 11.

La première flasque 12 est disposée à une première extrémité du tube creux 11 et la seconde flasque 13 est disposée à une distance d de la première flasque 12 ; cette distance d correspondant à la largeur de la gorge 14 et étant sensiblement supérieure ou égale à l'épaisseur e du support 2.

Des premières percées 120 sont ménagées dans la paroi de la première flasque 12. Ces premières percées 120 s'étendent radialement, à partir de la surface externe 110 du tube creux 11. De même, des deuxièmes percées 130 sont ménagées dans la paroi de la deuxième flasque 13. Ces deuxièmes percées 130 s'étendent radialement à partir de la surface externe 110 du tube creux 11, en vis-à-vis des premières percées 120 de la première flasque 12.

Ces premières 120 et deuxièmes 130 percées s'étendent sur une largeur radiale sensiblement égale. Comme représenté en figure 3, huit premières percées 120 sont réparties à équidistance autour de l'axe XX', chacune à un angle sensiblement égal à 45° de la suivante, en vis-à-vis de huit deuxièmes percées 130 disposées à l'identique. Bien entendu, l'invention ne se limite ni à huit percées, ni à une répartition à équidistance de ces percées.

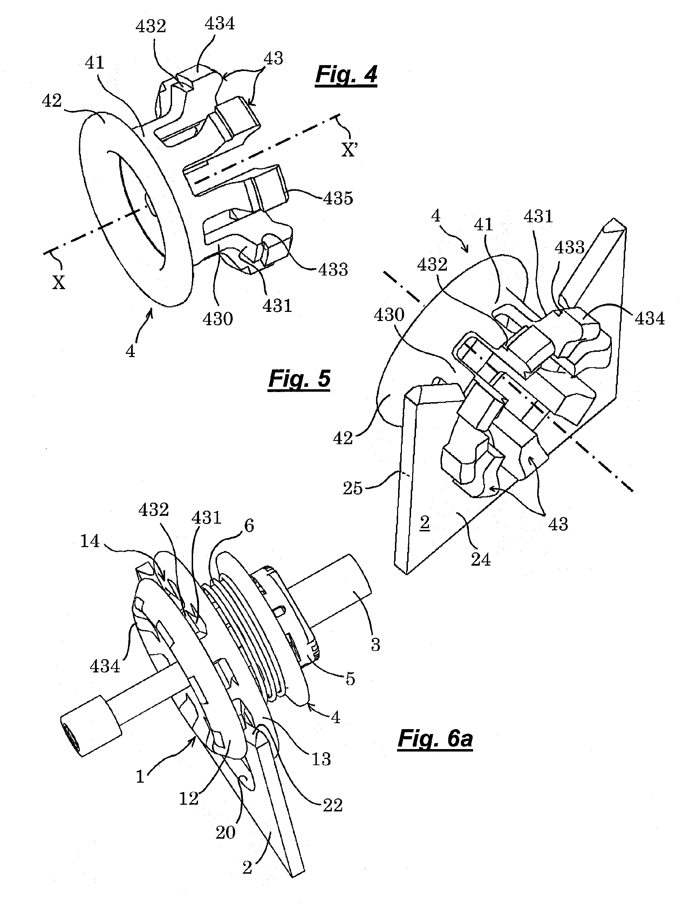

Comme représenté en figure 4, le manchon 4 est un corps creux de révolution autour de l'axe longitudinal XX', qui comprend :
- un tube creux 41 ;
- une partie annulaire 42 faisant saillie radialement sur la périphérie externe du tube creux 41, cette partie annulaire 42 étant disposée à une première extrémité du manchon 4 ; et
- les branches 43 faisant saillie longitudinalement autour de la seconde extrémité du manchon 4, sur la paroi du tube creux 41.

Le tube creux 41 a un diamètre interne sensiblement supérieur ou égal au diamètre externe du tube creux 11 du corps 1, de sorte à pouvoir coulisser le long de ce tube creux 11.

Le tube creux 41 a un diamètre externe sensiblement inférieur ou égal à la largeur L de l'ouverture 21 du support 2, de sorte à pouvoir être engagé radialement dans cette ouverture 21.

Les branches 43 sont conformées pour venir pénétrer à travers les percées 120, 130 ménagées dans les deux flasques 12, 13. De la sorte, ces branches 43 peuvent coulisser à l'intérieur de ces percées 120, 130 et, en particulier, entre ces flasques 12, 13 délimitant la gorge 14 de façon à pouvoir faire varier les dimensions radiales de ladite gorge 14 pour permettre ou non le passage de l'embout de fixation à travers l'ouverture 21. De plus, comme représenté en figure 7c, les branches 43 coulissent dans des rainures 15 aménagées sur la périphérie externe 110 du tube creux 11 du corps 1.

Dans le mode de réalisation du corps 1 décrit précédemment, huit branches 43 sont réparties à équidistance autour de l'axe XX', chacune à un angle sensiblement égal à 45° de la suivante.

Chaque branche 43 comporte deux portions de dimension différente :
- une première portion 430 inscrite dans un cercle de diamètre inférieur ou égal à la largeur L de l'ouverture 21 et prolongeant le tube creux 41 ; et
- une deuxième portion 432 inscrite dans un cercle de diamètre sensiblement inférieur ou égal au diamètre D de la découpe 20, et disposée entre la première portion 430 et l'extrémité libre 434 de ladite branche 43.

Ces deux portions 430, 432 présentent une surface interne coïncidant avec un cylindre de diamètre égal au diamètre interne du tube creux 41.

Les branches 43 présentent, entre les deux portions 430 et 432, une variation sensiblement linéaire d'épaisseur radiale. Ainsi, une portion inclinée 431 s'étend entre les deux premières portions 430 et 432, correspondant à une augmentation de l'épaisseur radiale, selon un angle prédéterminé.

De plus, la deuxième portion 432 comporte un épaulement radial 433, en regard du tube 41, correspondant à une paroi transversale s'étendant entre la deuxième portion 432 et l'extrémité libre 434 de la branche 43 ; ladite extrémité libre 434 étant inscrite dans un cercle de diamètre supérieur au diamètre D de la découpe 20.

De la sorte et comme représenté en figure 5, l'épaulement 433 des branches 43 est apte à venir en butée contre une face 24 du support 2, autour de la découpe 20, le manchon 4 s'étendant de part et d'autre dudit support 2. Dans cette position, le manchon 4 est en butée contre la paroi 24 du support 2, mais libre de se déplacer en translation dans le sens de l'éloignement des extrémités libres 434 de la paroi 24.

L'embout de fixation comporte en outre :
- un organe formant butée 5 fixé solidairement à la seconde extrémité du corps 1, opposée à la gorge 14 ; et
- un organe élastique 6 en appui respectivement sur l'extrémité du manchon 4 opposée aux branches 43 et sur la flasque 13 du corps 1 en regard de ladite extrémité, afin de maintenir le manchon 4 contre l'organe formant butée 5.

Comme représenté en figure 3, l'organe formant butée 5 comprend une bague 50 montée autour de la seconde extrémité du corps 1 afin de faire office de butée axiale du manchon 4. Cette bague 50 est liée solidairement à une face d'appui 51 transversale à l'axe longitudinal XX' qui présente, dans le cas où la pièce 3 forme une gaine et le module un embout de gaine, une ouverture 52 apte à être centrée sur la gaine 3.

Comme représenté en figure 3, la bague 50 comporte des languettes 53 déformables élastiquement et formées périphériquement, perpendiculairement à la face d'appui 51. Ces languettes 53 présentent une ouverture 54 apte à coopérer avec des ergots profilés 111 faisant saillie sur la périphérie externe du tube creux 11 du corps 1 ; lesdits ergots 111 étant régulièrement répartis sur la circonférence dudit tube creux 11. Ces ergots 111 sont profilés, de manière à former une rampe d'entrée pour permettre le clipage de l'organe formant butée 5 sur le corps 1. Bien entendu, le dispositif selon l'invention n'est pas limité à ce mode de fixation de l'organe formant butée 5 sur le corps 1.

L'assemblage du module de fixation est décrit ci après.

Dans un premier temps, l'organe élastique 6, préférentiellement un ressort hélicoïdal, est monté autour du tube creux 41 du manchon 4, entre les portions inclinées 431 des branches 43 et la partie annulaire 42. Le ressort 6 présente un diamètre interne sensiblement supérieur ou égal au diamètre externe du tube creux 41, de sorte à pourvoir coulisser sur la périphérie externe du tube creux 41 et des premières portions 430 des branches 43.

Dans le mode de réalisation représenté en figure 1, le manchon 4 est une pièce monobloc obtenu par moulage d'une matière plastique. Les branches 43 peuvent être déformées vers l'intérieur du tube creux 41 pour permettre au ressort 6 d'être engagé autour du manchon 4. Préférentiellement, chaque extrémité libre 434 présente un biseau 437, orienté vers l'axe longitudinal XX', de sorte à faciliter le passage dudit ressort 6.

Selon un autre mode de réalisation, le manchon 4 est une pièce constituée de deux blocs, la partie annulaire 42 et l'ensemble tube creux 41 - branches 43. Ainsi, le ressort 6 est engagé autour du tube creux 41, puis la partie annulaire 42 est liée audit tube creux 41, par exemple par clipage au moyen de languettes et d'ergots.

Dans un second temps, l'ensemble manchon tubulaire 4 - ressort 6 est monté à coulissement sur le corps 1, et plus particulièrement sur la seconde extrémité du tube creux 11, opposée à la gorge 14. Ce montage nécessite de faire coïncider les branches 43 avec les deuxièmes percées 130 de la seconde flasque 13 du corps 1.

Ainsi, le ressort 6 est en butée contre respectivement la partie annulaire 42 du manchon 4 et la première face transversale 131 de la seconde flasque 13 du corps 1, en regard de ladite partie annulaire 42 du manchon 4.

Dans un troisième temps, l'ensemble formé du manchon tubulaire 4, du ressort 6 et du corps 1 est bloqué en translation au moyen de l'organe formant butée 5. La bague 50 est montée à coulissement sur le tube creux 11 jusqu'à un épaulement 112 ménagé sur le tube creux 11. De plus, la face interne du tube creux 41 du manchon 4 comporte un épaulement 44, qui, lorsque l'organe formant butée 5 est fixé sur le corps 1 et que ledit corps 1 est fixé sur le support 2 comme représenté en figure 7b, est disposé en regard de l'épaulement 112 du corps 1.

Ainsi, une fois monté l'organe formant butée 5, le manchon 4 est libre de coulisser sur le tube creux 11 du corps 1, le ressort 6 étant destiné à amener l'épaulement 44 du manchon 4 en butée contre la bague 50. Ce manchon est ainsi monté entre deux positions :
- une position de verrouillage P1 dans laquelle la deuxième portion 432 des branches 43 s'étend au moins partiellement entre les deux flasques 12, 13 de sorte à coopérer avec la découpe 20 pour bloquer radialement le module de fixation ; et
- une position de montage P2 dans laquelle la première portion 430 des branches 43 s'étend entre les deux flasques 12, 13 de sorte à pouvoir engager radialement ledit module de fixation dans la découpe 20 du support 2 à travers l'ouverture 21.

Dans la position de verrouillage P1 comme représenté en figure 7b, c'est-à-dire lorsque l'organe formant butée 5 est fixé sur le corps 1 et que le ressort 6 plaque le manchon 4 contre la bague 50, les dimensions radiales de la gorge 14 correspondent à l'épaisseur radiale de la deuxième portion 432. Dans cette position P1, les branches 43 sont conformées de sorte que leurs extrémités libres 434 sont affleurantes à la première face transversale 121 de la première flasque 12, opposée à la gorge 14. De la sorte, l'opérateur de montage peut vérifier tactilement et visuellement que le module est en position de verrouillage P1.

De plus, dans cette position de verrouillage P1, l'épaulement radial 433 est affleurant à la deuxième face transversale 122 de la première flasque 12, en regard de la gorge 14. La portion inclinée 431 de chaque branche 43 s'étend partiellement entre les deux flasques 12, 13 définissant la gorge 14.

Comme représenté en figure 7b dans le cas d'une commande par câble, la pièce 3 est une gaine formée d'un tube de sertissage creux introduit dans la seconde extrémité du tube creux 11 du corps 1, où est disposé l'organe formant butée 5.

Le tube de sertissage creux 3 comporte une extrémité, à l'intérieur du tube creux 11 du corps 1, qui présente une cavité 32 dans laquelle est disposée une tête 92 d'un tube guide creux 9 dont la partie rectiligne 91 est placé en regard de celle 31 du tube de sertissage creux 3 selon l'axe XX'. Ledit tube de sertissage s'étend au-delà de la première extrémité du tube creux 11, où est disposé la première flasque 12.

La cavité 32 est partiellement fermée par des parois 33, disposées à l'extrémité du tube de sertissage 3, et la tête 92 du tube guide 9 est courbée vers l'extérieur, de sorte que le tube guide 9 est lié en translation au tube de sertissage 3.

Un câble de commande non représenté, notamment d'une boîte de vitesses, est susceptible de coulisser selon l'axe XX' à l'intérieur respectivement du tube de sertissage creux 3 et du tube guide creux 9 lorsque le module de fixation est verrouillé sur le support 2, formant arrêt de gaine.

Autour du tube de sertissage creux 3 est emmanché un premier dispositif 7 amortisseur de vibrations dont la partie annulaire 71 vient s'appuyer sur une partie annulaire 34 du tube de sertissage creux 3 ; cette partie annulaire 34 faisant saillie autour du tube de sertissage creux 3. Dans ce mode de réalisation représenté en figure 7b, l'ouverture 52 de l'organe formant butée 5 est apte à être centrée sur une portée épaulée 72 du premier dispositif amortisseur 7. Une fois l'organe formant butée 5 fixé sur le corps 1, la face d'appui 51 est en butée contre la partie annulaire 71 du premier dispositif amortisseur 7 ; des jeux étant ménagés entre la bague 50 et l'épaulement 112 du tube creux 11 du corps 1 et entre la face d'appui 51 et la seconde extrémité dudit tube creux 11.

De manière analogue, autour du tube de sertissage creux 3 est emmanché un deuxième dispositif 8 amortisseur de vibrations identique au premier 7 et dont la partie annulaire 81 vient s'appuyer sur l'autre face de la partie annulaire 34 du tube de sertissage creux 3.

Ce deuxième dispositif amortisseur 8 est monté à coulissement dans le tube creux 11 du corps 1 ; un épaulement interne 113 étant ménagé dans la paroi interne dudit tube creux 11, de sorte que la partie annulaire 81 du deuxième dispositif amortisseur 8 vient en butée contre ledit épaulement interne 113.

L'assemblage du dispositif de fixation, c'est-à-dire le verrouillage du module de fixation sur le support 2, est décrit ci après.

Une fois assemblé le module de fixation, les étapes suivantes consistent à engager la gorge 14 du corps 1 dans la découpe 20 du support 2 selon un mouvement radial, jusqu'à ce que ledit module soit verrouillé sur ledit support 2, c'est-à-dire bloqués en translation longitudinalement et radialement et libre en rotation autour de l'axe longitudinal XX'.

Comme représenté en figure 6a, le module de fixation est en position de verrouillage P1 et est présenté face à la découpe 20, de sorte que la gorge 14 du corps 1 soit sensiblement positionnée dans le plan transverse du support 2, en regard de la découpe 20 dudit support 2.

Une fois que l'approche et l'introduction de la gorge 14 dans la découpe 20 au niveau des pentes biseautées 22 est réalisée, le module est guidé sur le support 2 par cette même gorge 14.

La pointe du biseau des pentes 22 est disposée en regard des portions inclinées 431 des branches 43, s'étendant partiellement entre les flasques 12, 13. Lors de l'engagement radial soutenu par l'opérateur, les pentes biseautées 22 impriment un effort sur ces portions inclinées 431 de sorte à amener le manchon 4 en position de montage P2, à l'encontre de l'effort imposé par le ressort 6. L'opérateur peut diminuer l'effort d'engagement radial en poussant sur le manchon 4, et en particulier sur sa partie annulaire 42, de sorte à comprimer le ressort 6.

Ainsi, le manchon 4 se déplace dans le sens d'un rapprochement de la partie annulaire 42 de la deuxième flasque 13, tendant à comprimer le ressort 6, concomitamment à l'engagement radial du module de fixation.

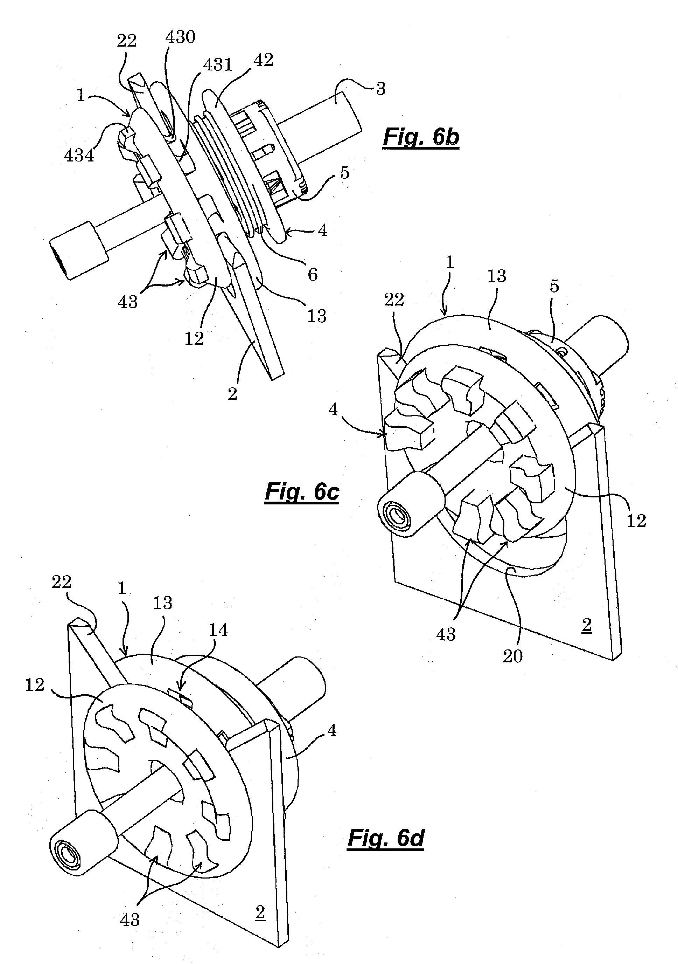

De la sorte et comme représenté en figures 6b et 6c, les extrémités libres 434 des branches 43 font saillie à la première face transversale 121 de la première flasque 12.

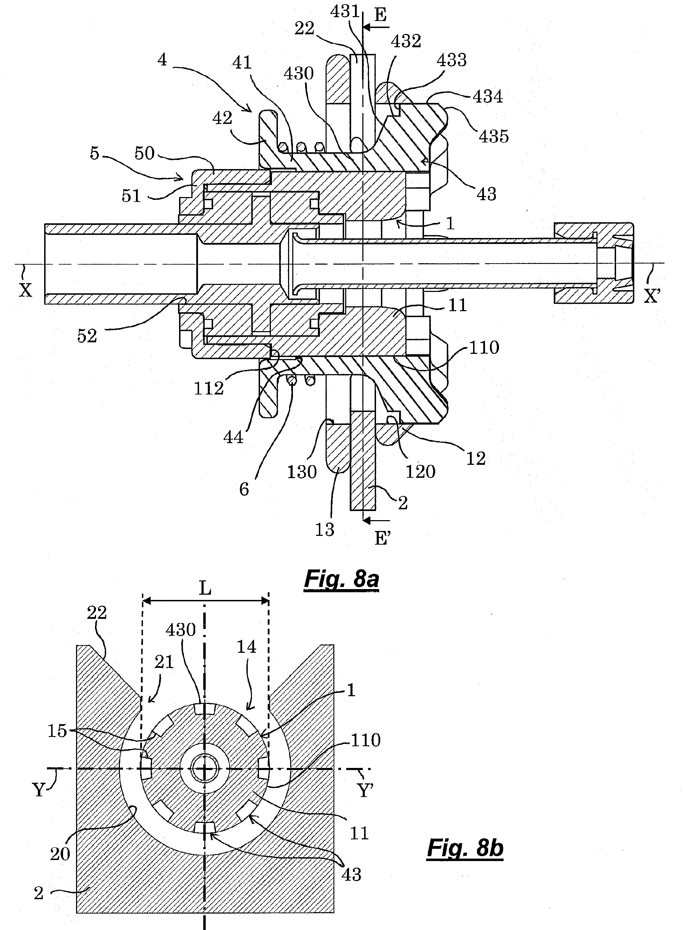

L'effort d'engagement radial étant maintenu, le manchon 4 coulisse longitudinalement jusqu'à la position de montage P2 : la première portion 430 des branches 43 s'étend entre les flasques 12, 13 et est positionné entre les deux extrémités en regard des pentes 22 délimitant l'ouverture 21 du support 2. Dans cette position P2 comme représenté en figure 8b, les dimensions radiales de la gorge 14 correspondent à l'épaisseur radiale de la première portion 430 des branches 43.

Comme représenté en figure 8a et 8b, ces premières portions 430 sont aptes à être engagés radialement dans cette ouverture 21, de sorte que le module s'engage dans ladite ouverture 21 et ensuite dans la découpe 20.

Quand le module de fixation est suffisamment engagé pour que les extrémités en regard des pentes 22 délimitant l'ouverture 21 n'impriment plus d'effort sur les branches 43, le ressort 6 contraint le manchon 4 à revenir en position de verrouillage P1, comme représenté en figure 6d.

Dans cette position, comme représenté en figure 7b, les épaulements 433 des branches 43 sont en butée contre la face 24 du support 2, autour de la découpe 20 ; des deuxièmes portions 432 étant en contact avec la paroi circulaire de la découpe 21.

Ainsi, comme représenté en figure 7c, le manchon 4 est bloqué radialement dans la découpe 20 via les deuxièmes portions 432. De plus, le ressort 6 maintient le manchon 4 dans cette position de verrouillage P2, assurant ainsi le verrouillage du module de fixation sur le support 2.

En effet, ce module de fixation est bloqué :
- longitudinalement par les flasques 12 et 13 du corps 1 ; et
- radialement par les deuxièmes portions 432 du manchon 4.

L'opérateur peut vérifier tactilement et visuellement que le module est bien verrouillé, du fait que le manchon 4 est affleurant au corps 1 en position de verrouillage P1.

Pour désengager le module de fixation du support 2, il suffit de comprimer le ressort 6 en imprimant un effort sur la partie annulaire 42 du manchon 4, de sorte à amener le manchon 4 en position d'assemblage P2. Ensuite, il suffit de désengager radialement le module hors de la découpe 20 à travers l'ouverture 21.

L'invention décrite ci avant présente plusieurs autres avantages. Tout d'abord, l'assemblage du module de fixation est aisé, avec ses quatre éléments montés à coulissement les uns par rapport aux autres. Ensuite, le verrouillage dudit module est très simple car nécessitant seulement un engagement radial soutenu, sans indexation préalable, donc possible avec une seule main et en aveugle. De plus, les éléments corps 1, manchon 4 et organe formant butée 5 sont préférentiellement des pièces obtenues par moulage d'une matière plastique, donc très économiques. En outre, le dispositif de fixation assure un verrouillage durable et solide de la pièce 3 sur le bâti, sans risque de désengagement du fait d'une erreur de montage ou de vibrations.

Comme représenté en figure 7c, l'ouverture 21 correspond à un secteur angulaire prédéterminé inférieur à 180°, préférentiellement entre 60 et 120°. Le nombre, la disposition angulaire et l'orientation des branches 43 sont prédéterminés de sorte à pouvoir bloquer radialement le module de fixation dans la découpe 20 du support 2. Pour cela, il faut que au moins une branche 43 soit disposée le long de la paroi circulaire de la découpe 20, entre une extrémité de la pente 22 et l'axe horizontal YY' ; ledit axe horizontal YY' étant dans le plan transverse à l'axe longitudinal XX', sensiblement parallèle à l'axe passant par les deux extrémités des pentes 22 délimitant l'ouverture 21.

Bien entendu l'exemple de mise en oeuvre évoqué ci-dessus ne présente aucun caractère limitatif et d'autres détails et améliorations peuvent être apportés à selon l'invention, sans pour autant sortir du cadre de l'invention où, par exemple, d'autres formes de branches, percées et découpe peuvent être réalisées.

## Revendications

1. Dispositif de fixation d'une pièce (3) sur un bâti, comportant :
un support (2) solidaire dudit bâti, ledit support (2) présentant une découpe sensiblement circulaire (20) débouchant perpendiculairement à l'axe (XX') de ladite découpe (20) par une ouverture (21) de largeur (L) inférieure au diamètre (D) de ladite découpe (20) ; et
un module de fixation porté par ladite pièce (3) et comportant :
- un corps de révolution (1) présentant à l'une de ses extrémités deux flasques (12, 13) en saillie radiale délimitant une gorge (14) apte à être engagé radialement dans la découpe (20) dudit support (2), à travers l'ouverture (21) ; et
- un manchon tubulaire (4) monté coulissant sur ledit corps (1), formé d'un tube (41) présentant une pluralité de branches (43) faisant saillie longitudinalement à l'une des extrémités dudit tube (41); lesdites branches (43) étant conformées pour venir pénétrer à travers des percées (120, 130) ménagées dans lesdites flasques (12, 13) de façon à pouvoir faire varier les dimensions radiales de ladite gorge (14) pour permettre ou non le passage du module de fixation à travers l'ouverture (21).

2. Dispositif selon la revendication 1, **caractérisé en ce que** les branches (43) du manchon tubulaire (4) comprennent deux portions de dimension différente, une première (430) et une deuxième (432) portions inscrites respectivement dans un cercle de diamètre inférieure à la largeur (L) de l'ouverture (21) et dans un cercle de diamètre sensiblement inférieur au diamètre (D) de la découpe (20) ; le manchon tubulaire (4) étant monté entre deux positions :
- une position de verrouillage (P1) dans laquelle la deuxième portion (432) s'étend au moins partiellement entre les deux flasques (12, 13) de sorte à coopérer avec la découpe (20) pour bloquer radialement le module de fixation ; et
- une position de montage (P2) dans laquelle la première portion (430) s'étend entre les deux flasques (12, 13) du corps (1) de sorte à pouvoir engager radialement ledit module de fixation dans la découpe (20) du support (2) à travers l'ouverture (21).

3. Dispositif de fixation selon l'une quelconque des revendications précédentes, **caractérisé en ce que** les branches (43) présentent une variation sensiblement linéaire d'épaisseur radiale.

4. Dispositif de fixation selon l'une quelconque des revendications précédentes, **caractérisé en ce que** le module de fixation comprend un organe formant butée (5) fixé solidairement à l'extrémité du corps (1) opposée à la gorge (14), ledit organe formant butée (5) comprenant une bague (50) montée autour de ladite extrémité afin de faire office de butée axiale du manchon (4).

5. Dispositif de fixation selon la revendication 4, **caractérisé en ce que** le module de fixation comprend un organe élastique (6) en appui respectivement sur l'extrémité du manchon (4) opposée aux branches (43) et sur la flasque (13) du corps (1) en regard de ladite extrémité, afin de maintenir le manchon (4) contre l'organe formant butée (5).

6. Dispositif de fixation selon l'une quelconque des revendications précédentes, **caractérisé en ce que** l'ouverture (21) du support (2) est délimitée par les extrémités en regard de deux pentes (22) inclinées en direction de la découpe (20) et sensiblement symétriquement opposées par rapport à l'axe (XX') de ladite découpe (20) ; lesdites pentes (22) étant aptes à coopérer avec les branches (43) du manchon (4) afin de faire coulisser ledit manchon (4) sur le corps (1).

7. Dispositif de fixation selon l'une quelconque des revendications précédentes, **caractérisé en ce que** les branches (43) comportent un épaulement radial (433) en regard du tube (41) du manchon (4), apte à venir en butée contre le support (2) autour de sa découpe (20).

8. Dispositif de fixation selon la revendication 7, **caractérisé en ce que** l'extrémité libre (434) des branches (43) est affleurante à la flasque (12) disposée à l'extrémité du corps (1), lorsque l'épaulement radial (433) est en butée contre le support (2).

9. Dispositif de fixation selon l'une quelconque des revendications précédentes, **caractérisé en ce que** le nombre, la disposition angulaire et l'orientation des branches (43) sont prédéterminés de sorte à pouvoir bloquer radialement le module de fixation dans la découpe (20) du support (2).

10. Dispositif de fixation selon l'une quelconque des revendications précédentes, **caractérisé en ce que** le module de fixation est agencé pour faire office d'embout de gaine et le support (2) d'arrêt de gaine, la pièce (3) étant une gaine d'un câble de commande notamment pour une boîte de vitesses d'un véhicule automobile.
